# EUROPEAN PATENT SPECIFICATION

(11) **EP 1 249 118 B1**
(45) Date of publication and mention of the grant of the patent: **12.03.2008**
(21) Application number: 01942820.0
(22) Date of filing: 19.01.2001
(51) Int. Cl.: H04L 29/00, H04M 1/57, H04Q 7/38

(54) **METHOD AND APPARATUS FOR RETRIEVING CALLING PARTY INFORMATION IN A MOBILE COMMUNICATIONS SYSTEM**
VERFAHREN UND VORRICHTUNG ZUM ABRUFEN VON ANRUFERINFORMATIONEN IN EINEM MOBILKOMMUNIKATIONSSYSTEM
PROCEDE ET APPAREIL PERMETTANT D'OBTENIR DES INFORMATIONS D'APPELANT DANS UN SYSTEME DE COMMUNICATION MOBILE

(30) Priority: 19.01.2000 US 176806 P; 23.08.2000 US 644307; 03.09.2000 WO PCT/SE00/01689
(43) Date of publication of application: 16.10.2002
(73) Proprietor: Sony Ericsson Mobile Communications AB, 221 88 Lund (SE)
(72) Inventor: MINBORG, Per-Åke, S-444 60 Stora Höga (SE); LUNDQUIST, Carl, SE 191 43 Sollentuna (SE)
(74) Representative: Cederbom, Hans Erik August
(86) International application number: PCT/SE2001/000094
(87) International publication number: WO 2001/054373

(56) References cited:
- EP-A2- 0 869 688
- WO-A1-99/00751
- WO-A2-98/51056
- US-A- 5 850 433

## Description

### CROSS-REFERENCE TO RELATED APPLICATIONS

This application claims priority from PCT/SE00/01689 which in turn claims priority from U.S. applications serial numbers 60/176,806 and 09/644,307.

### BACKGROUND OF THE INVENTION

The present invention generally relates to mobile communications systems. More particularly, the present invention relates to providing calling party identification information to a called party in a mobile communication system.

In the field of mobile communications, it is known to provide calling party information, which may be in the form of a "service page" or "phone page", to a called party's terminal. For example, European Patent Application EP 0869688A2 discloses a method and means for transmitting a service page in a communication system. The service page information is provided to, and displayed on, a terminal associated with a telecommunications network using Calling Line Identification Presentation (CLIP) or Connected Line Identification Presentation (COLP). According to the method, a first subscriber sends a call request to a second subscriber, and CLIP information is transmitted to the second subscriber. The second subscriber contacts an Internet Address Server and transmits the CLIP information. The Internet Address Server locates an Internet address corresponding to the CLIP, if available, and transmits the located Internet address to the second subscriber. The second subscriber's terminal then contacts the Internet address and downloads a service page, which is then displayed on the second subscribers terminal. The service page includes information characteristic of the first subscriber.

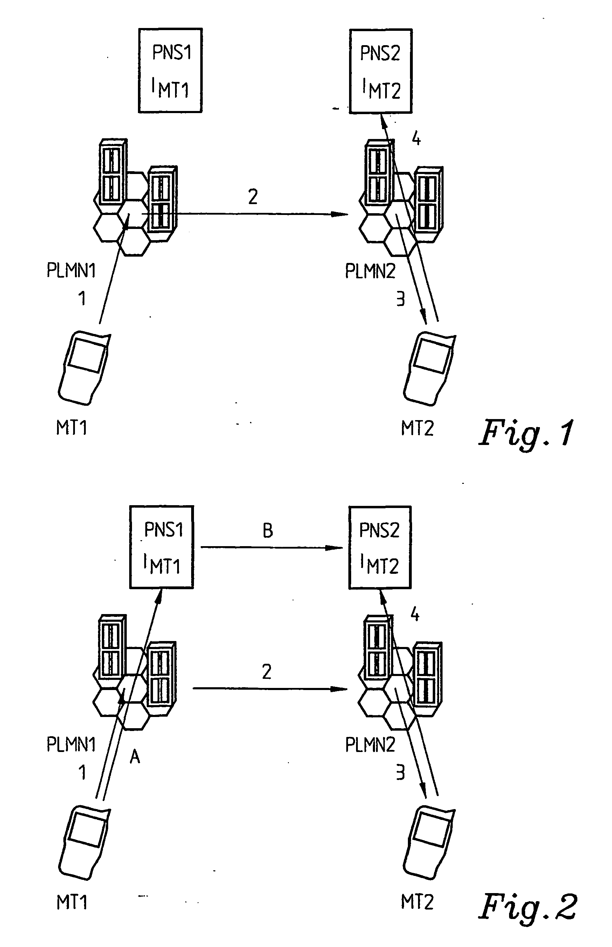

An example of such a system is shown in FIG. 1. A mobile terminal MT1 (associated with network PLMN1) initiates a call to mobile terminal MT (associated with network PLMN2) in step 1 by transmitting a dialed number (corresponding to MT2) to network PLMN1. This step is typically performed when a subscriber (not shown) associated with MT1 inputs the dialed number and pushes a SEND or transmission button on the terminal MT1. After step 1 is performed, the first network PLMN1 sends a message in step 2 to second network PLMN2 requesting that a call be set up with mobile terminal MT2. After step 2 is performed, the second network PLMN2 in step 3 sends a message to second mobile terminal MT2, activating a voice channel to establish the call. The message sent in step 3 also provides an indication of the identity of mobile terminal MT1 in the form of CLI information. Finally, in step 4, the mobile terminal MT2 sends a message to an associated external server PNS2, requesting a service page associated with the calling party based on the CLI information received in step 3.

There are several drawbacks associated with relying on Connected Line Identification (CLI) to effect service page retrieval. A first problem is that the communication network service provider will typically charge an additional fee for CLI distribution. A second problem is that not every service provider is able or willing to exchange numbers or other identification data when subscribers call between different networks; this potentially makes CLI useless for a large number of subscribers. A third problem is that subscribers cannot control individually whether or not their number or service page is to be shown. For example, some subscribers maintain their number in secrecy; since this number is not transmitted when a call is placed, a corresponding service page cannot be retrieved by other parties. Thus, using the CLI technique, it is not useful for a subscriber having an unlisted or secret identification to have a service page.

A further problem with conventional calling party identification techniques is that some technologies or systems do not support CLI techniques or may require additional hardware, such as a fixed telephone line. A still further problem with CLI techniques is that if the CLI information is diverted to another number, the CLI information can be lost in some cases.

It would be desirable to identify a calling party to a called party while avoiding the use of CLI techniques, or in such a way so as to complement or enhance CLI techniques. It would also be desirable to identify a calling party without relying on service providers or the mobile communication networks of the calling and or called parties. It would further be desirable to avoid the problems identified above and to provide additional advantages over conventional CLI-based calling party identification techniques.

### SUMMARY OF THE INVENTION

The present invention overcomes the above-noted problems, and achieves additional advantages, by providing for a method for providing calling party identification information in the form of a phone page to a called terminal, which either avoids or enhances the use of CLI techniques. In order to overcome the above-noted problems, methods according to the independent claims are provided. According to the embodiments disclosed herein, a first mobile terminal transmits a message to a first external server in conjunction with a triggering event such as the transmission of the dialed number to a first communication network. The first external server determines the identity of both the calling party (first terminal) and the called party (second terminal), and transmits this information to a second external server associated with a second communication network and the second terminal. The transmission of the calling party identification information from the first external server to the second external server allows the called party (second terminal) to retrieve the information without relying on the second network to provide CLI information. In another embodiment, the first and second servers are the same, and the first and second networks are the same.

### BRIEF DESCRIPTION OF THE DRAWINGS

The present invention can be more fully understood by referring to the following Detailed Description of presently-preferred embodiments in conjunction with the accompanying drawings, in which like reference indicators are used to designate like elements, and in which:
FIG. 1 is a functional diagram of a conventional call connection process using CLI information;
FIG. 2 is a functional diagram of a call connection process according to one embodiment of the present invention;
FIG. 3 is a flow chart describing an exemplary method for handling a call set up in a calling party's terminal, according to one aspect of the present invention;
FIG. 4 is a flow chart describing an exemplary method for handling a call set up in a first external server according to another aspect of the present invention;
FIG. 5 is a flow chart describing an exemplary method for handling a call set up in a second external server according to another aspect of the present invention; and
FIG. 6 is a flow chart describing an exemplary method for handling a call set up in a called terminal according to an additional aspect of the present invention.

### DETAILED DESCRIPTION OF THE INVENTION

Referring now to FIG. 2, a functional diagram of a call connection process consistent with a first embodiment of the present invention is shown. In FIG. 2, the first, or calling, mobile terminal MT1 transmits (in response to appropriate subscriber input) a called party telephone number (in this example, the telephone number corresponding to second mobile terminal MT2) to a first public land mobile network PLMN1 in step 1. The first network PLMN1 transmits a message to the second network PLMN2, instructing PLMN2 to establish a voice channel for communication with second terminal MT2 in step 2. In step 3, the second network PLMN2 sends a message to second mobile terminal MT2 to activate a voice channel and, optionally, provide supplemental information such as CLI information. In step 4, the second mobile terminal MT2 transmits a message to a second phone page number service (e.g., a server external to the PLMN communication network) PNS2 to retrieve a service page or phone page containing information about the calling party. It will be appreciated that the foregoing steps 1-4 are substantially the same as in FIG. 1.

According to one implementation of the present invention, substantially simultaneously with the transmission of the calling information to PLMN1, the first mobile terminal MT1 also transmits a data object request signal to a first external server PNS1 in order to retrieve a data object such as a phone page containing information about the called party associated with the second mobile terminal MT2 in step A. Note that this transmission in step A can be performed by first terminal MT1 at the same time as the transmission of the calling information, or can be performed just prior to or just after the transmission of the calling information (for example, to avoid using too much of the mobile terminal's limited available power at one time). As a result of step A, the first external server PNS1 now knows or can derive (e.g., by using a procedure such as is described in WO01/54421 A2), the public identity of both the first and second mobile terminals MT1 and MT2. The first external server PNS1 retrieves, derives, or otherwise obtains the identity information and, in step B, transmit this information to the second external server PNS2 over a second communication link independent of the link or channel used to transmit information between the first and second PLMN communication networks in step 2. Preferably, the timing of transmissions in steps A and B is such that the information containing the identity and/or phone page information for the calling party is provided in step B to the second external server PNS2 before steps 2, 3, and 4 are completed, so as to allow the second external server PNS2 to provide requested phone page information to the second mobile terminal MT2 substantially immediately, or at least sooner than having to derive the phone page information based on CLI information transmitted to the second network PLMN2 in step 4.

Note that the requested phone page information can include a pointer or address of a phone page, or the actual phone page itself.

In an alternative embodiment, the second network PLMN2 can be set up (e.g., by appropriate software programming) to provide the phone page information requested in step 4 by either using the CLI information (if this has been provided to the second mobile terminal MT2 in step 3 and provided to the second external server PNS2 in step 4), or using the phone page information provided by the first external server in step B, whichever occurs first or which results in the requested phone page information being provided to the second mobile terminal MT2 in the shortest period of time.

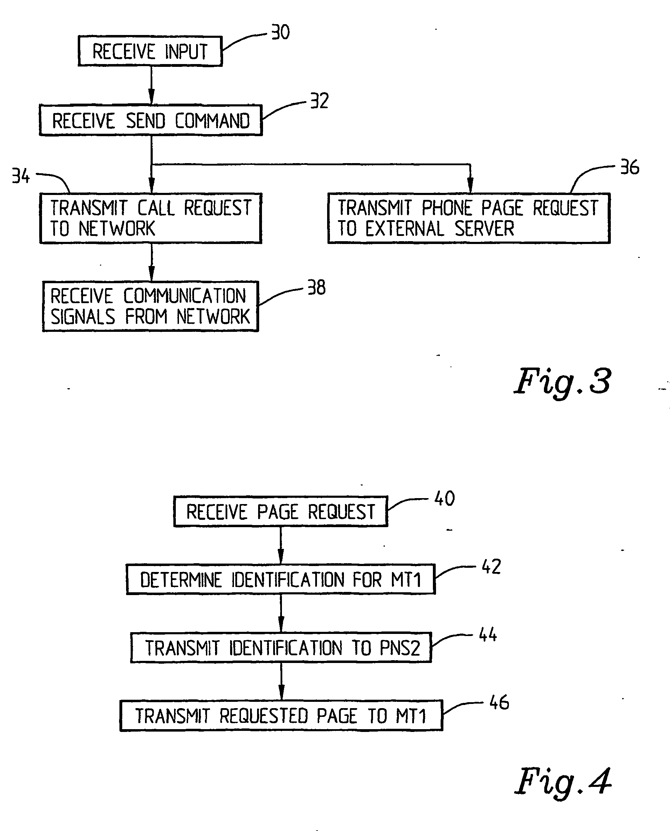

Referring now to FIG. 3, a flow chart describing a method performed by the first mobile terminal MT1 in the embodiment of FIG. 2. Such a method can be implemented using a suitably programmed processor resident in the mobile terminal MT1. In step 30, the mobile terminal receives an input (e.g., via a keypad) of a telephone number to be called. In step 32, the mobile terminal receives a SEND or similar command to initiate a call to the called telephone number. In step 34, the mobile terminal transmits an appropriately-formatted signal, including the called telephone number, to the first network PLMN1. Substantially simultaneously with step 34, the mobile terminal in step 36 transmits a data object request (e.g., for a phone page corresponding to the called mobile terminal) to the first external server PNS1. It will be appreciated that step 36 can be performed just prior to, simultaneously with, or just after step 34, with the goal being to ensure that the first external server PNS 1 can provide phone page information for the calling terminal MT1 to the second external server PNS2 before the second external server receives the phone page request from the second terminal MT2. In step 38, after a voice channel has been established with mobile terminal MT2, the mobile terminal MT1 receives communication from mobile terminal MT2.

Referring now to FIG. 4, a flow chart describing a method performed by the first external server PNS 1 in the embodiment of FIG. 2. Such a method can be implemented using a suitably programmed processor resident in the first external server PNS1. In step 40, the first external server receives a phone page request, including a called number for which a phone page or other data object is desired, from mobile terminal MT1. In step 42, the first external server determines, from the phone page request, identification information for both the calling terminal MT1 and the called terminal MT2. In step 44, the first external server transmits the identification information for the calling terminal MT1 to the second external server PNS2 which is associated with the called terminal MT2. In step 46, the first external server returns requested phone page information for the called terminal MT2 to the requesting terminal MT1. It will be appreciated that sequence of steps 40-46 can be revised as necessary, preferably keeping in mind the goal of providing the identification information for MT1 to the second external server prior to the second external server's receipt of a phone page request from the second terminal MT2.

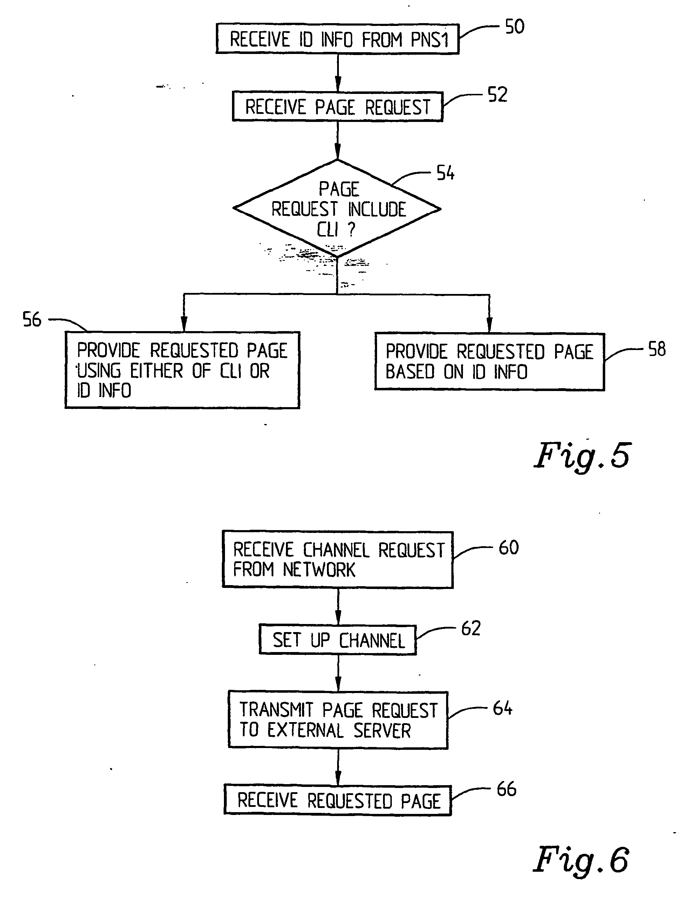

Referring now to FIG. 5, a flow chart describing a method performed by the second external server PNS2 in the embodiment of FIG. 2. Such a method can be implemented using a suitably programmed processor resident in the second external server PNS2. In step 50, the second external server PNS2 receives identification information for the calling terminal MT1 from the first external server PNS1. The identification information can be the phone page information for terminal MT2 or can be information which allows the second external server PNS2 to derive the phone page information for the terminal MT2. In step 52, the second external server PNS2 receives a phone page request from called terminal MT2. In step 54, the second external server PNS2 determines whether the phone page request includes CLI information. If CLI information is included, the second external server responsively generates and provides the requested phone page information using: 1) the calling information received in step 50, or 2) the CLI information provided in step 54, whichever provides the fastest result. If the CLI information is not included in the phone page request from the second terminal MT2, the second external server PNS2 responsively provides, in step 56, the requested phone page information based on the information received in step 50. It will be appreciated that step 54 can be omitted, and the second external server can automatically provide the requested phone page information based solely on the information received in step 50.

Referring now to FIG. 6, a flow chart describing a method performed by the second, called mobile terminal MT2 in the example of FIG. 2. Such a method can be implemented using a suitably programmed processor resident in the second mobile terminal MT2. In step 60, the second mobile terminal MT2 receives a channel set up request signal (which may or may not include CLI information) from the second network PLMN2, which is the current service provider for the terminal MT2. In step 62, the mobile terminal MT2 completes the communication link with mobile terminal MT1 via networks PLMN1 and PLMN2. In step 64, the second mobile terminal transmits a phone page request to the second external server PNS2, requesting the phone page corresponding to the calling party. As indicated above, the phone page request may or may not include CLI information, depending upon whether or not the channel set up request includes the CLI information. In step 66, the second mobile terminal MT2 receives the requested phone page information.

The foregoing description has focused on a call as a triggering event to initiate the processes in the foregoing embodiments. It should also be appreciated that other triggering events can trigger the processes above. Such triggering events can include, by way of example, the following:
- An outgoing call is or is about to be initiated.
- An addressed B-party answers a call.
- An incoming call is imminent or has just started
- A conference call is or is about to be initiated
- A call is disconnected
- A call is conducted (under which several triggering events can be generated).
- A subscriber is put on hold.
- A new cell in the PLMN has been selected.
- The location of a subscriber has changed
- A new Public Land Mobile Network (PLMN) operator is selected.
- A new country of registration is made.
- A UE is about to be switched off.
- A UE has been switched on.
- When a designated button on a UE is pressed.
- In response to a talk spurt received by a UE.
- A voice mail has been left to a subscriber.
- An SMS has been sent or received by a subscriber.

Further, information indicative of which "triggering event" initiated the phone page process can be transferred to MT2 (via suitably-programmed software instructions).

## Claims

1. A method for communicating between first (MT1) and second (MT2) communication devices connected by a communications network, comprising:
receiving, at a server (PNS1), external to the communications network, associated with the first communication device (MT1), a first signal from the first mobile communication device (MT1), the first signal including at least an identity of the second device (MT2);
identifying a server (PNS2), external to the communications network, associated with the second mobile communication device (MT2);
rendering a data object from the first signal; and
forwarding the data object to the server (PNS2) associated with the second device (MT2).

2. The method of claim 1, wherein the first signal includes a dialed number corresponding to the second mobile communication device (MT2) and an identification of the first mobile communication device (MT1).

3. The method of claim 1, wherein the data object is rendered without using calling line identification CLI information.

4. A method for communicating between a first communication device (MT1) and a second communication device (MT2), connected by a communications network, comprising the steps of:
receiving by a server (PNS2), external to the communications network, associated with the second device (MT2) a data object associated with the first device (MT1) from a server (PNS1), external to the communications network, associated with the first device (MT1);
identifying, at the second communication device (MT2), the occurrence of a triggering event;
by the second device (MT2), transmitting to the server (PNS2), external to the communications network, associated with the second communication device (MT2) a request for a data object associated with the first communication device (MT1);
generating the requested data object in the server (PNS2), external to the communications network, associated with the second communication device (MT2), based on calling information provided by the server (PNS1), external to the communications network, associated with the first communication device (MT1); and
by the second device (MT2) receiving the requested data object from the server (PNS2), external to the communications network, associated with the second communication device (MT2).

5. The method of claim 4, wherein the triggering event does not include calling line identification CLI information.

6. The method of claim 4, wherein the triggering event includes a calling line identification CLI information, but wherein the requested data object is not derived on the basis of the calling line identification information.

7. A method for communicating between a first (MT1) and a second (MT2) mobile communication device connected by a communications network, comprising the steps of:
receiving by a server (PNS2), external to the communications network, associated with the second device (MT2) a data object, containing calling party information, associated with the first device (MT1) from a server (PNS1), external to the communications network, associated with the first device (MT1);
identifying, at the second communication device (MT2), the occurrence of a triggering event;
by the second communication device (MT2), transmitting a data object request including calling line identification CLI information, to a server (PNS2), external to the communications network, associated with the second mobile communication device (MT2);
determining whether the requested data object can be generated based on the CLI information or the calling party information faster, and generating the requested data object using the faster technique; and
receiving the requested data object from the server (PNS2), external to the communications network, associated with the second communication device (MT2).

8. The method of claim 7, wherein the data object includes a pointer to the phone page associated with the second device.

9. The method of claim 7, wherein the data object includes a phone page associated with the second device.

10. The method of claim 7, wherein the data object comprises the public identity of the second device.

## Patentansprüche

1. Verfahren zum Kommunizieren zwischen einer ersten (MT1) und einer zweiten (MT2) Kommunikationsvorrichtung, die durch ein Kommunikationsnetz verbunden sind, mit folgenden Schritten:
Empfangen eines ersten Signals von der ersten mobilen Kommunikationsvorrichtung (MT1) bei einem Server (PNS1) außerhalb des Kommunikationsnetzes, der der ersten Kommunikationsvorrichtung (MT1) zugeordnet ist, wobei das erste Signal mindestens eine Identität der zweiten Vorrichtung (MT2) umfasst;
Identifizieren eines Servers (PNS2) außerhalb des Kommunikationsnetzes, der der zweiten mobilen Kommunikationsvorrichtung (MT2) zugeordnet ist;
Herstellen eines Datenobjekts aus dem ersten Signal; und
Weiterleiten des Datenobjekts zu dem Server (PNS2), der der zweiten Vorrichtung (MT2) zugeordnet ist.

2. Verfahren nach Anspruch 1, bei dem das erste Signal eine gewählte Nummer, die der zweiten mobilen Kommunikationsvorrichtung (MT2) entspricht, und eine Identifizierung der ersten mobilen Kommunikationsvorrichtung (MT1) umfasst.

3. Verfahren nach Anspruch 1, bei dem das Datenobjekt ohne Verwenden von Anrufleitungsidentifizierungsinformationen (CLI-Informationen) hergestellt wird.

4. Verfahren zum Kommunizieren zwischen einer ersten Kommunikationsvorrichtung (MT1) und einer zweiten Kommunikationsvorrichtung (MT2), die durch ein Kommunikationsnetz verbunden sind, mit folgenden Schritten:
Empfangen eines Datenobjekts, das der ersten Vorrichtung (MT1) zugeordnet ist, durch einen Server (PNS2) außerhalb des Kommunikationsnetzes, der der zweiten Vorrichtung (MT2) zugeordnet ist, von einem Server (PNS1) außerhalb des Kommunikationsnetzes, der der ersten Vorrichtung (MT1) zugeordnet ist;
Identifizieren des Auftretens eines auslösenden Ereignisses bei der zweiten Kommunikationsvorrichtung (MT2);
Senden einer Anfrage nach einem Datenobjekt, das der ersten Kommunikationsvorrichtung (MT1) zugeordnet ist, an den Server (PNS2) außerhalb des Kommunikationsnetzes, der der zweiten Kommunikationsvorrichtung (MT2) zugeordnet ist, durch die zweite Vorrichtung (MT2);
Erzeugen des angefragten Datenobjekts in dem Server (PNS2) außerhalb des Kommunikationsnetzes, der der zweiten Kommunikationsvorrichtung (MT2) zugeordnet ist, basierend auf Anrufinformationen, die durch den Server (PNS1) außerhalb des Kommunikationsnetzes, der der ersten Kommunikationsvorrichtung (MT1) zugeordnet ist, geliefert werden; und
Empfangen des angefragten Datenobjekts von dem Server (PNS2) außerhalb des Kommunikationsnetzes, der der zweiten Kommunikationsvorrichtung (MT2) zugeordnet ist, durch die zweite Vorrichtung (MT2).

5. Verfahren nach Anspruch 4, bei dem das auslösende Ereignis keine Anrufleitungsidentifizierungsinformationen (CLI-Informationen) umfasst.

6. Verfahren nach Anspruch 4, bei dem das auslösende Ereignis Anrufleitungsidentifizierungsinformationen (CLI-Informationen) umfasst, bei dem jedoch das angefragte Datenobjekt nicht auf der Basis der Anrufleitungsidentifizierungsinformationen abgeleitet wird.

7. Verfahren zum Kommunizieren zwischen einer ersten (MT1) und einer zweiten (MT2) mobilen Kommunikationsvorrichtung, die durch ein Kommunikationsnetz verbunden sind, mit folgenden Schritten:
Empfangen eines Datenobjekts, das Informationen eines anrufenden Teilnehmers enthält, das der ersten Vorrichtung (MT1) zugeordnet ist, von einem Server (PNS1) außerhalb des Kommunikationsnetzes, der der ersten Vorrichtung (MT1) zugeordnet ist, durch einen Server (PNS2) außerhalb des Kommunikationsnetzes, der der zweiten Vorrichtung (MT2) zugeordnet ist;
Identifizieren des Auftretens eines auslösenden Ereignisses bei der zweiten Kommunikationsvorrichtung (MT2);
Senden einer Datenobjektanfrage, die Anrufleitungsidentifizierungsinformationen (CLI-Informationen) umfasst, an einen Server (PNS2) außerhalb des Kommunikationsnetzes, der der zweiten mobilen Kommunikationsvorrichtung (MT2) zugeordnet ist, durch die zweite Kommunikationsvorrichtung (MT2);
Bestimmen, ob das angefragte Datenobjekt basierend auf den CLI-Informationen oder den Informationen eines anrufenden Teilnehmers schneller erzeugt werden kann, und Erzeugen des angefragten Datenobjekts unter Verwendung des schnelleren Verfahrens; und
Empfangen des angefragten Datenobjekts von dem Server (PNS2) außerhalb des Kommunikationsnetzes, der der zweiten Kommunikationsvorrichtung (MT2) zugeordnet ist.

8. Verfahren nach Anspruch 7, bei dem das Datenobjekt einen Zeiger auf die Telefonseite, die der zweiten Vorrichtung zugeordnet ist, umfasst.

9. Verfahren nach Anspruch 7, bei dem das Datenobjekt eine Telefonseite, die der zweiten Vorrichtung zugeordnet ist, umfasst.

10. Verfahren nach Anspruch 7, bei dem das Datenobjekt die öffentliche Identität der zweiten Vorrichtung aufweist.

## Revendications

1. Procédé de communication entre un premier (MT1) et un deuxième (MT2) dispositif de communication, reliés par un réseau de communications, comprenant :
la réception, au niveau d'un serveur (PNS1), externe au réseau de communications, associé avec le premier dispositif (MT1) de communication, d'un premier signal à partir du premier dispositif (MT1) de communication mobile, le premier signal comportant au moins une identité du deuxième dispositif (MT2) ;
l'identification d'un serveur (PNS2), externe au réseau de communications, associé avec le deuxième dispositif (MT2) de communication mobile ;
la remise d'un objet de données à partir du premier signal ; et
le transfert de l'objet de données vers le serveur (PNS2) associé avec le deuxième dispositif (MT2).

2. Procédé selon la revendication 1, dans lequel le premier signal comporte un numéro composé correspondant au deuxième dispositif (MT2) de communication mobile ainsi qu'une identification du premier dispositif (MT1) de communication mobile.

3. Procédé selon la revendication 1, dans lequel l'objet de données est rendu sans utiliser d'information CLI d'identification de ligne appelante.

4. Procédé de communication entre un premier dispositif (MT1) de communication et un deuxième (MT2) dispositif de communication, reliés par un réseau de communications, comprenant les étapes :
de réception par un serveur (PNS2), externe au réseau de communications, associé avec le deuxième dispositif (MT2), d'un objet de données associé avec le premier dispositif (MT1) à partir d'un serveur (PNS1), externe au réseau de communications, associé avec le premier dispositif (MT1) ;
d'identification, au deuxième (MT2) dispositif de communication, de l'occurrence d'un événement de déclenchement ;
de transmission, par le deuxième dispositif (MT2), vers le serveur (PNS2), externe au réseau de communications, associé avec le deuxième (MT2) dispositif de communication, d'une requête pour un objet de données associé avec le premier dispositif (MT1) de communication ;
de production de l'objet de données demandé dans le serveur (PNS2), externe au réseau de communications, associé avec le deuxième (MT2) dispositif de communication, sur la base d'une information d'appel fournie par le serveur (PNS1), externe au réseau de communications, associé avec le premier dispositif (MT1) de communication ; et
de réception, par le deuxième dispositif (MT2), de l'objet de données demandé à partir du serveur (PNS2), externe au réseau de communications, associé avec le deuxième (MT2) dispositif de communication.

5. Procédé selon la revendication 4, dans lequel l'événement de déclenchement ne comporte pas d'information CLI d'identification de ligne appelante.

6. Procédé selon la revendication 4, dans lequel l'événement de déclenchement comporte une information CLI d'identification de ligne appelante, mais dans lequel l'objet de données demandé n'est pas déterminé sur la base de l'information d'identification de ligne appelante.

7. Procédé de communication entre un premier (MT1) et un deuxième dispositif (MT2) de communication mobile, reliés par un réseau de communications, comprenant les étapes:
de réception par un serveur (PNS2), externe au réseau de communications, associé avec le deuxième dispositif (MT2) d'un objet de données, contenant une information d'abonné appelant, associé avec le premier dispositif (MT1) à partir d'un serveur (PNS1), externe au réseau de communications, associé avec le premier dispositif (MT1) ;
d'identification, au deuxième (MT2) dispositif de communication, de l'occurrence d'un événement de déclenchement ;
de transmission, par le deuxième (MT2) dispositif de communication, d'une requête d'objet de données comportant une information CLI d'identification de ligne appelante, vers un serveur (PNS2), externe au réseau de communications, associé avec le deuxième dispositif (MT2) de communication mobile ;
de détermination si l'objet de données demandé peut être produit ou non en se basant sur l'information CLI ou l'information d'abonné appelant plus rapidement, et de production de l'objet de données demandé en utilisant la technique plus rapide ; et
de réception de l'objet de données demandé à partir du serveur (PNS2), externe au réseau de communications, associé avec le deuxième (MT2) dispositif de communication.

8. Procédé selon la revendication 7, dans lequel l'objet de données comporte un pointeur à la page de téléphone associée avec le deuxième dispositif.

9. Procédé selon la revendication 7, dans lequel l'objet de données comporte une page de téléphone associée avec le deuxième dispositif.

10. Procédé selon la revendication 7, dans lequel l'objet de données comporte l'identité publique du deuxième dispositif.
